# EUROPEAN PATENT SPECIFICATION

(11) **EP 2 953 900 B1**
(45) Date of publication and mention of the grant of the patent: **19.09.2018**
(21) Application number: 14702612.4
(22) Date of filing: 05.02.2014
(51) Int. Cl.: C01G 25/00, B01J 37/03, B01J 23/00, B01J 23/06, B01J 23/14, B01D 53/86, B01J 35/10, B01J 37/00, B01J 23/10, B01D 53/94, B01J 23/12

(54) **PRECIPITATED AND CALCINED COMPOSITION BASED ON ZIRCONIUM OXIDE AND CERIUM OXIDE**
AUSGEFÄLLTE UND KALZINIERTE ZUSAMMENSETZUNG AUF BASIS VON ZIRKONIUMOXID UND CEROXID
COMPOSITION PRÉCIPITÉE ET CALCINÉE À BASE D'OXYDE DE ZIRCONIUM ET D'OXYDE DE CÉRIUM

(30) Priority: 05.02.2013 WO PCT/EP2013/052188
(43) Date of publication of application: 16.12.2015
(73) Proprietor: Rhodia Operations, 75009 Paris (FR)
(72) Inventor: OHTAKE, Naotaka, Anan City Tokushima 774-0022 (JP); SASAKI, Toshihiro, Anan City Tokushima 774-0022 (JP); TOKUDA, Jun, Anan City Tokushima 774-0022 (JP); ROHART, Emmanuel, F-80000 Amiens (FR)
(74) Representative: Senninger, Thierry
(86) International application number: PCT/EP2014/052185
(87) International publication number: WO 2014/122140

(56) References cited:
- WO-A1-2005/100249
- WO-A2-2011/138255
- US-A1- 2007 244 002

## Description

### TECHNICAL FILED

The present invention concerns precipitated and calcined mixed oxide compositions based on zirconium oxide and cerium oxide that exhibit a high specific surface area after calcination and a very low maximum reduction temperature of the oxide after calcination. Compositions of the present invention may be notably used in various catalytic systems, such as for the treatment of exhaust gases from internal combustion engines.

### BACKGROUND ART

The following discussion of the prior art is provided to place the invention in an appropriate technical context and enable the advantages of it to be more fully understood. It should be appreciated, however, that any discussion of the prior art throughout the specification should not be considered as an express or implied admission that such prior art is widely known or forms part of common general knowledge in the field.

"Multifunctional" catalysts are currently used for the treatment of exhaust gases from internal combustion engines (automobile afterburning catalysis). The term "multifunctional" is understood to mean catalysts capable of carrying out not only oxidation, in particular of carbon monoxide and hydrocarbons present in exhaust gases, but also reduction, in particular of nitrogen oxides also present in these gases ("three-way" catalysts). Zirconium oxide and cerium oxide today appear as two constituents which are particularly important and advantageous for this type of catalyst.

To be effective, these so-called washcoat materials should possess high specific surface area at high temperature and a high oxygen storage capacity (OSC) with fast oxygen release.

A further required quality for these materials is their reducibility. Reducibility is understood to mean, here and for the remainder of the description, the content of cerium(IV) in these materials capable of being converted into cerium(III) under the effect of a reducing atmosphere and at a given temperature. This reducibility can be measured, for example, by a consumption of hydrogen within a given temperature range. It is due to the cerium, which has the property of being reduced or of being oxidized. This reducibility should, desirably, be as high as possible.

H2-Temperature Programmed Reduction (H2-TPR) is a commonly known method to measure the OSC and reducibility properties of materials. It is generally accepted that the higher the hydrogen uptake (expressed in mol of H₂/g of oxide) and the lower the temperature of reduction, the better the catalytic properties. WO2005/100249 A2 describes a composition based on zirconium oxide and on cerium oxide comprising tin oxide in a proportion of at most 25% by weight of oxide for the use as catalysts. WO2005/100249 A2 does not disclose compositions based on zirconium oxide and on cerium oxide further comprising the combination of tin, lanthanum and yttrium oxides.

US 2007/0244002 discloses a composition comprising from about 30 mol% to about 95 mol% zirconium, from about 0.5 mol% to about 50 mol% cerium, up to about 20 mol% of a stabilizer selected from the group consisting of yttrium, rare earths, and combinations comprising at least one of the stabilizers, and about 0.01 to about 25 mol% of a metal selected from the group consisting of indium, tin, and mixtures thereof.

### DESCRIPTION OF INVENTION

The objective of the invention is thus the development of a mixed oxide composition having at the same time a low maximum reduction temperature and a high specific surface area at high temperature.

The present invention relates to a composition comprising zirconium oxide, cerium oxide, and:
- between 0.1 and 10.0% by weight of lanthanum oxide;
- between 3.0 and 20.0% by weight of yttrium and/or gadolinium oxide; and
- between 1.0 and 15.0% by weight of tin oxide;
   wherein said composition exhibits:
- a BET specific surface area , after calcination at 1000°C for 6 hours, of at least 45 m²/g; and
- a BET specific surface area, after calcination at 1100°C for 6 hours, of at least 25 m²/g.

The compositions of the invention are obtained by precipitation and calcination.

The present invention also relates to a process to obtain the compositions as defined above, a catalytic system comprising said compositions and their use for the treatment of exhaust gases from internal combustion engines, notably by bringing into contact exhaust gases from internal combustion engines with these catalytic systems.

Other characteristics, details and advantages of the invention will become even more fully apparent on reading the description which will follow and concrete but non limiting examples intended to illustrate it.

Throughout the description, including the claims, the term "comprising one" should be understood as being synonymous with the term "comprising at least one", unless otherwise specified, and "between" should be understood as being inclusive of the limits. Therefore, it is specified that, in the continuation of the description, unless otherwise indicated, the values at the limits are included in the ranges of values which are given.

In the remainder of the description, the term "specific surface area" is understood to mean the BET specific surface area (SBET) determined by nitrogen adsorption in accordance with standard ASTM D 3663-78 laid down from the Brunauer-Emmett-Teller method described in "The Journal of the American Chemical Society, 60, 309 (1938)".

Specific surface area measurements were carried out on samples calcined in air. Furthermore, specific surface area values at a given temperature and for a given time correspond, unless otherwise indicated, to values measured on samples calcined at the given temperature held over the given time.

The term "rare earth metal" is understood to mean yttrium and the elements from the group consisting of the elements of the Periodic Table with an atomic number of between 57 and 71 inclusive.

The contents are expressed as % by weight of a given oxide with respect to the total weight of the oxide, unless otherwise indicated. The expression "cerium oxide" refers to ceric oxide (CeO₂). Zirconium oxide is ZrO₂. Tin oxide is in the form of stannic oxide (SnO₂). Yttrium oxide is Y₂O₃. Gadolinium oxide is Gd₂O₃. Praseodymium oxide is Pr₆O₁₁. Neodymium oxide is Nd₂O₃.

### Composition

The mixed oxide composition of the invention comprises:
- zirconium oxide;
- cerium oxide;
- between 0.1 and 10.0% by weight of lanthanum oxide;
- between 3.0 and 20.0% by weight of yttrium and/or gadolinium oxide; and
- between 1.0 and 15.0% by weight of tin oxide.

The composition may also comprise praseodymium and/or neodymium oxide in an amount comprised between 0.0 and 10.0% by weight.

The amount of lanthanum oxide may be between 0.5 and 9.0 % by weight, even between 1.0 and 8.5% by weight.

The amount of yttrium and/or gadolinium may be between 5.0 and 20.0% by weight, even between 5.0 and 18.0% by weight.

The amount of tin oxide may be between 1.0 and 12.0 by weight.

Typically cerium oxide and zirconium oxide represent the complement to 100% by weight of the composition.

The combined amount of zirconium oxide and cerium oxide is typically at least 25.0% by weight. The combined amount of zirconium oxide and cerium oxide generally does not exceed 95.9% by weight.

The Ce/Zr molar ratio may be comprised between 0.10 and 4.00, more particularly between 0.15 and 2.25. The Ce/Zr molar ratio is preferably inferior or equal to 1.00.

The composition of the invention has a specific surface area (SBET), after calcination at 1000°C for 6 hours, of at least 45 m²/g. The specific surface area, after calcination at 1000°C for 6 hours, is preferably of at least 50 m²/g, more preferably of at least 55 m²/g, notably of at least 60 m²/g. By way of example, specific surface area values, after calcination at 1000°C for 6 hours, of up to 70 m²/g may be obtained.

The composition of the invention has a specific surface area, after calcination at 1100°C for 6 hours, of at least 25 m²/g. The specific surface area, after calcination at 1100°C for 6 hours, is preferably at least 30 m²/g, more preferably at least 35 m²/g, notably at least 40 m²/g. By way of example, specific surface area values, after calcination at 1100°C for 6 hours, of up to 45 m²/g may be obtained.

The composition may exhibit a maximum reduction temperature, measured by temperature-programmed reduction (H₂-TPR) as described below, inferior or equal to 500°C, preferably inferior or equal to 450°C, more preferably inferior or equal to 400°C, particularly inferior or equal to 350°C.

By way of example, values of the maximum reduction temperature of 330°C, even of 325°C may be obtained.

### Process

The compositions of the present invention may be obtained according to the processes described below.

Usually, the process comprises the calcination of a precipitate comprising compounds of zirconium, of cerium, of tin, of lanthanum, of yttrium and/or gadolinium and, optionally, other compounds. Such a precipitate is generally obtained by the addition of a basic compound to a liquid mixture comprising the salts of the metals. The precipitate is heated in an aqueous medium before drying and calcining the precipitate.

In a first embodiment, the process comprises the following steps:
(a) forming a mixture comprising compounds of zirconium, cerium, tin, lanthanum, yttrium and/or gadolinium and, optionally other compounds, in a liquid medium;
(b) bringing said mixture into contact with a basic compound, to obtain a precipitate;
(c) heating said precipitate in an aqueous medium; and
(d) calcining the precipitate thus obtained, wherein an additive selected from anionic surfactants, nonionic surfactants, polyethylene glycols, carboxylic acids and their salts and surfactants of the carboxymethylated fatty alcohol ethoxylate type can be added to the precipitate obtained in step (c).

Such a process is notably described in detail in WO2005/100249 A1.

In step (a) the liquid medium is generally an aqueous medium.

Typically, the precipitate obtained in step (c) is separated from the aqueous medium, optionally containing the additive, before calcination in step (d). Separation of the precipitate may be carried out according to any commonly known means, typically by filtration.

In a second embodiment, the process comprises at least the following steps:
(a1) forming a mixture comprising 1) either compounds of zirconium and cerium alone; or 2) compounds of zirconium and cerium with one or more of the compounds of lanthanum, yttrium and/or gadolinium, and tin in a liquid medium;
(b1) bringing said mixture in contact with a basic compound, under stirring;
(c1) bringing the medium obtained in the preceding step in contact, under stirring, with i) either the compound(s) of the present composition that were not present in step (a1);
(d1) heating said precipitate in an aqueous medium; optionally
(e1) adding an additive selected from anionic surfactants, nonionic surfactants, polyethylene glycols, carboxylic acids and their salts and surfactants of the carboxymethylated fatty alcohol ethoxylate type to the precipitate obtained in the preceding step; and
(f1) calcining the precipitate.

Such a process is notably described in WO2011/138255 A1.

Typically, the precipitate is separated from the liquid medium, e.g. by filtration, before calcining step (f1).

The first step of the process according to both the first and the second embodiment consists in preparing a mixture of at least part of the compounds of the elements of the composition that it is sought to prepare. The mixing is generally carried out in a liquid medium which is preferably water.

The compounds are preferably soluble compounds. They may in particular be zirconium, cerium, tin and rare earth salts. These compounds may be selected from the nitrates, sulfates, acetates, chlorides and ceric ammonium nitrate. By way of examples, mention may thus be made of zirconium sulfate, zirconyl nitrate or zirconyl chloride. The zirconyl sulfate may originate from placing crystalline zirconyl sulfate in solution. It may also have been obtained by dissolution of zirconium basic sulfate with sulfuric acid, or else by dissolution of zirconium hydroxide with sulfuric acid. In the same way, the zirconyl nitrate may originate from placing crystalline zirconyl nitrate in solution or else it may have been obtained by dissolution of zirconium basic carbonate or else by dissolution of zirconium hydroxide with nitric acid.

It may be advantageous to use a zirconium compound in the form of a combination or of a mixture of the above-mentioned salts. Mention may, for example, be made of the combination of zirconium nitrate with zirconium sulfate, or else the combination of zirconium sulfate with zirconyl chloride. The respective proportions of the various salts can vary to a large extent, from 90/10 to 10/90 for example, these proportions denoting the contribution of each of the salts in grams of total zirconium oxide.

Among cerium salts, mention may also in particular be made of cerium IV salts, such as the nitrate or ceric ammonium nitrate for example, which are particularly suitable here. Preferably, ceric nitrate is used. An aqueous solution of ceric nitrate can, for example, be obtained by reacting nitric acid with a ceric oxide hydrate prepared conventionally by reacting a solution of a cerous salt, for example cerous nitrate, and a solution of aqueous ammonia in the presence of aqueous hydrogen peroxide. Use may also preferably be made of a solution of ceric nitrate obtained according to the process of electrolytic oxidation of a cerous nitrate solution as described in FR-A-2570087, and which here constitutes an advantageous raw material.

It will be noted here that the aqueous solutions of cerium salts and of zirconyl salts can have a certain initial free acidity which can be adjusted by adding a base or an acid. It is, however, just as possible to use an initial solution of cerium and zirconium salts actually having a certain free acidity as mentioned above, as it is to use solutions that have been neutralized beforehand to a lesser or greater extent. This neutralization can be carried out by adding a basic compound to the abovementioned mixture so as to limit this acidity. This basic compound may, for example, be a solution of aqueous ammonia or else of alkali metal (sodium, potassium, etc.) hydroxides, but preferably a solution of aqueous ammonia.

It will be noted that, when the starting mixture contains cerium (III), it is preferable to involve an oxidizing agent, for example aqueous hydrogen peroxide, during the process. This oxidizing agent may be used by adding it to the reaction medium during step (a)/(a1), during step (b)/(b1) or else at the beginning of step (c1).

It is advantageous to use salts with a purity of at least 99.5% and more particularly of at least 99.9%.

It is also possible to use a sol as starting zirconium or cerium compound. The term "sol" denotes any system consisting of fine solid particles of colloidal dimensions, i.e. dimensions of between approximately 1 nm and approximately 200 nm, containing a zirconium or cerium compound, this compound generally being a zirconium or cerium oxide and/or oxide hydrate, in suspension in an aqueous liquid phase.

The mixture can without distinction be obtained either from compounds initially in the solid state, and will subsequently be introduced into a vessel heel of water for example, or else directly from solutions or suspensions of these compounds followed by mixing, in any order, of said solutions or suspensions.

According to the process(es) of the invention, the mixture is brought in contact with a basic compound in order to obtain a precipitate. Products of the hydroxide type can be used as base or basic compound. Mention may be made of alkali metal or alkaline-earth metal hydroxides. Use may also be made of secondary, tertiary or quaternary amines. However, amines and aqueous ammonia may be preferred since they reduce the risks of pollution by alkali metal or alkaline-earth metal cations. Mention may also be made of urea.

The basic compound may be more particularly used in the form of a solution. Finally, it may be used with a stoichiometric excess in order to be sure of optimum precipitation.

Mixing of the basic compound with the mixture of metals is carried out under stirring. It can be carried out in any way, for example by adding a preformed mixture of the compounds of the above-mentioned elements to the basic compound in the form of a solution.

In the process according to the second embodiment, step (c1) of the process consists in mixing the medium resulting from step (b1) with the remaining compounds of the compositions. The mixing can be carried out in any way, for example by adding a preformed mixture of the remaining compounds to the mixture obtained at the end of step (b1). It is also carried out with stirring, but under conditions such that the stirring energy used during step (c1) is less than that used during step (b1). More specifically, the energy used during step (c1) is at least 20% less than that of step (b1) and it may be more particularly less than 40% and even more particularly than 50% thereof.

The heating of the precipitate can be carried out directly on the reaction medium obtained at the end of steps (b) or (c1) or on a suspension obtained after separating the precipitate from the reaction medium, optionally washing, and dispersing the precipitate again into water. The temperature to which the medium may be heated is at least 80°C, preferably at least 100°C and even more particularly at least 130°C. It can be between, for example, 100°C and 160°C. The heating operation can be carried out by introducing the liquid medium into a closed chamber (closed reactor of the autoclave type). Under the temperature conditions given above, and in an aqueous medium, it can thus be specified, by way of illustration, that the pressure in the closed reactor can range between an upper value at 1 bar (10⁵ Pa) and 165 bar (1.65 × 107 Pa), preferably between 5 bar (5 × 10⁵ Pa) and 165 bar (1.65 × 10⁷ Pa). The heating can also be carried out in an open reactor for temperatures of about 100°C.

The heating can be carried out either under air, or under an inert gas, preferably nitrogen.

The heating time can vary within broad limits, for example between 1 and 48 hours, preferably between 2 and 24 hours. Likewise, the increase in temperature is carried out at a rate which is not essential, and it is thus possible to reach the fixed reaction temperature by heating the medium for, for example, between 30 minutes and 4 hours, these values being given entirely by way of indication.

It is possible to carry out several heating operations. Thus, the precipitate obtained after the heating step and optionally washing can be suspended in water and then a further heating of the resulting medium can be carried out. This further heating is carried out under the same conditions as those that were described for the first one. It is also possible to add to the precipitate resulting from the preceding step, an additive which is selected from anionic surfactants, nonionic surfactants, polyethylene glycols and carboxylic acids and their salts and also surfactants of the carboxymethylated fatty alcohol ethoxylate type. With regard to this additive, reference may be made to the teaching of application WO-98/45212 and the surfactants described in this document may be used.

As surfactants of anionic type, mention may be made of ethoxycarboxylates, ethoxylated fatty acids, sarcosinates, phosphate esters, sulfates such as alcohol sulfates, alcohol ether sulfates and sulfated alkanolamide ethoxylates, and sulfonates such as sulfosuccinates, and alkylbenzene or alkylnapthalene sulfonates. As nonionic surfactants, mention may be made of acetylenic surfactants, alcohol ethoxylates, alkanolamides, amine oxides, ethoxylated alkanolamides, long-chain ethoxylated amines, copolymers of ethylene oxide/propylene oxide, sorbitan derivatives, ethylene glycol, propylene glycol, glycerol, polyglyceryl esters and ethoxylated derivatives thereof, alkylamines, alkylimidazolines, ethoxylated oils and alkylphenol ethoxylates. Mention may in particular be made of the products sold under the brands Igepal®, Dowanol®, Rhodamox® and Alkamide®.

With regard to the carboxylic acids, it is in particular possible to use aliphatic monocarboxylic or dicarboxylic acids and, among these, more particularly saturated acids. Fatty acids and more particularly saturated fatty acids may also be used. Mention may thus in particular be made of formic acid, acetic acid, propionic acid, butyric acid, isobutyric acid, valeric acid, caproic acid, caprylic acid, capric acid, lauric acid, myristic acid and palmitic acid. As dicarboxylic acids, mention may be made of oxalic acid, malonic acid, succinic acid, glutaric acid, adipic acid, pimelic acid, suberic acid, azelaic acid and sebacic acid.

Salts of the carboxylic acids may also be used, in particular the ammonium salts. By way of example, mention may be made more particularly of lauric acid and ammonium laurate.

It is also possible to use a surfactant which is selected from those of the carboxymethylated fatty alcohol ethoxylate type.

The expression "product of the carboxymethylated fatty alcohol ethoxylate type" is intended to mean products consisting of ethoxylated or propoxylated fatty alcohols comprising a CH₂-COOH group at the end of the chain.

These products may correspond to the formula:

R₁-O-(CR₂R₃-CR₄R₅-O)ₙCH₂-COOH

in which R₁ denotes a saturated or unsaturated carbon-based chain of which the length is generally at most 22 carbon atoms, preferably at least 12 carbon atoms; R₂, R₃, R₄ and R₅ may be identical and may represent hydrogen or else R₂ may represent a CH₃ group and R₃, R₄ and R₅ represent hydrogen; n is a non-zero integer that may be up to 50 and more particularly between 5 and 15, these values being included. It will be noted that a surfactant may consist of a mixture of products of the formula above for which R₁ may be saturated or unsaturated, respectively, or alternatively products comprising both -CH₂-CH₂-O- and-C(CH₃)-CH₂-O- groups.

The surfactant can be added in two ways. It can be added directly to the suspension of precipitate resulting from heating step (d1). It can also be added to the solid precipitate after separation thereof, by any known means, from the medium in which the heating took place.

The amount of surfactant used, expressed as percentage by weight of additive relative to the weight of the composition calculated as oxide, is generally between 5% and 100% and more particularly between 15% and 60%.

According to another advantageous variant of the invention, before implementing the calcination step of the process, washing of the precipitate is carried out after having separated it from the liquid medium in which it was in suspension. Washing can be carried out with water, preferably with water at basic pH, for example aqueous ammonia solution.In a final step of the process of the invention, the precipitate recovered is subsequently calcined. The calcination step makes it possible to develop the crystallinity of the product formed and it can also be adjusted and/or selected according to the subsequent operating temperature intended for the composition according to the invention, this being done while taking into account the fact that the specific surface area of the product may decrease as the calcination temperature used increases. Calcination is generally carried out under air, but a calcination carried out, for example, under inert gas or under a controlled atmosphere, oxidizing or reducing, is not excluded.

In practice, the calcination temperature is generally limited to a range of values of between 500°C and 900°C, typically between 600°C and 850°C, and more particularly between 700°C and 800°C.

The duration of the calcination is not critical and depends on the temperature. Purely by way of indication, it can be at least 2 hours and more particularly between 2 hours and 4 hours.

The compositions of the invention as described above or as obtained by means of the preparation process previously described are in the form of powders, but they can optionally be formed so as to be in the form of granules, pellets, foams, beads, cylinders or honeycombs of variable dimensions.

These compositions can be applied to any support commonly used in the field of catalysis, that is to say in particular thermally inert supports. This support can be chosen from alumina, titanium oxide, cerium oxide, zirconium oxide, silica, spinels, zeolites, silicates, crystalline silicoaluminum phosphates or crystalline aluminum phosphates.

The present invention also concerns a precipitated and calcined composition based on zirconium oxide and cerium oxide susceptible to be obtained according to the above mentioned processes of the invention.

### Application

The compositions of the invention may be used in catalytic systems. These catalytic systems can comprise a coating (wash coat), based on these compositions and with catalytic properties, on a substrate of the metal or ceramic monolith type, for example. Such a monolith type can be a filter type based on silicon carbide, cordierite or aluminium titanate, for instance. The coating can itself also comprise a support of the type of those mentioned above. This coating is obtained by mixing the composition with the support, so as to form a suspension which can subsequently be deposited on the substrate.

These catalytic systems and more particularly the compositions of the invention can have a great many applications. They are therefore particularly well suited to, and thus usable in, the catalysis of various reactions, such as, for example, dehydration, hydrosulfurization, hydrodenitrification, desulfurization, hydrodesulfurization, dehydrohalogenation, reforming, steam reforming, cracking, hydrocracking, hydrogenation, dehydrogenation, isomerization, dismutation, oxychlorination, dehydrocyclization of hydrocarbons or other organic compounds, oxidation and/or reduction reactions, the Claus reaction, treatment of exhaust gases from internal combustion engines, demetallation, methanation, the shift conversion, oxidation of CO, purification of air by low-temperature oxidation (<200°C, indeed even <100°C), catalytic oxidation of the soot emitted by internal combustion engines, such as diesel engines or petrol engines operating under lean burn conditions.

In the case of these uses in catalysis, the compositions of the invention can be employed in combination with precious metals. The nature of these metals and the techniques for the incorporation of the latter in these compositions are well known to a person skilled in the art. For example, the metals can be platinum, rhodium, palladium, gold or iridium and they can, in particular, be incorporated in the compositions by impregnation.

Among the uses mentioned, the treatment of exhaust gases from internal combustion engines (automobile afterburning catalysis) is a particularly advantageous application. The compositions of the invention can thus be used in this case for three-way catalysis. More particularly still in the case of this use in three-way catalysis, the compositions can be employed in combination with an NOx (nitrogen oxides) trap for the treatment of exhaust gases from petrol engines operating with a lean burn mixture, for example in the three-way catalysis layer of such a trap. The compositions of the invention can be incorporated in oxidation catalysts for diesel engines.

For this reason, the invention also relates very particularly to a process for the treatment of exhaust gases from internal combustion engines which is characterized in that use is made, as catalyst, of a composition or of a catalytic system as described above.

Another advantageous use is the purification of air at temperatures of less than 200°C, indeed even of less than 100°C, this air comprising at least one compound of the carbon monoxide, ethylene, aldehyde, amine, mercaptan or ozone type and generally of the type of the volatile organic compounds or atmospheric pollutants, such as fatty acids, hydrocarbons, in particular aromatic hydrocarbons, and nitrogen oxides (for the oxidation of NO to give NO₂), and of the malodorous compounds type.

The present invention also concerns then a process for the purification of air, said air comprising carbon monoxide, ethylene, aldehyde, amine, mercaptan, ozone, volatile organic compounds, atmospheric pollutants, fatty acids, hydrocarbons, aromatic hydrocarbons, nitrogen oxides or malodorous compounds, comprising the step of bringing into contact said gases with the catalytic system of the invention. Mention may more particularly be made, as compounds of this type, of ethanethiol, valeric acid and trimethylamine. This treatment is carried out by bringing the air to be treated into contact with a composition or a catalytic system as described above or obtained by the processes described in detail above.

Should the disclosure of any patents, patent applications, and publications which are cited herein conflict with the description of the present application to the extent that it may render a term unclear, the present description shall take precedence.The invention will be now described in more detail with reference to the following examples whose purpose is merely illustrative and not limitative of the scope of the invention.

### EXPERIMENTAL PART

### Maximum reducibility temperature

This measurement is carried out by performing a programmed temperature reduction on a OKURA RIKEN Co., LTD. TP-5000 device with a quartz reactor. This device makes it possible to measure the hydrogen consumption of a composition as a function of the temperature.

This measurement is carried out on a 500 mg sample which has been calcined beforehand at 1000°C for 6 hours under air.

The measurement is carried out using hydrogen diluted to 10% by volume in argon with a flow rate of 30 ml/min.

A rise in temperature up to 900°C is carried out with a rise gradient of 10°C/min under H₂ at 10 vol% in Ar.

The scavenging of the hydrogen is calculated from the missing surface area of the hydrogen signal from the baseline at ambient temperature to the baseline at 900°C. The maximum reducibility temperature (temperature at which the scavenging of the hydrogen is maximum and where, in other words, the reduction of the cerium(IV) to give cerium(III) is also maximum and which corresponds to the maximum O₂ lability of the composition) is measured using a thermocouple placed at the heart of the sample.

The specific surface area is measured using the BET method using a MOUNTECH Co., LTD. Macsorb analyzer with a 200 mg sample which was calcined beforehand at 1000°C for 6 hours or 1100°C for 6 hours under air.

### Example 1

Preparation of a composition based on cerium, zirconium, lanthanum, yttrium and tin oxides in the respective proportions by weight of oxide of 20%, 60%, 5%, 10% and 5%.

Two solutions of nitrates were prepared beforehand, one consisting of ceric nitrate, zirconyl nitrate and tin nitrate and the other of lanthanum nitrate and yttrium nitrate. Tin nitrate was freshly prepared according to the following procedure:. 34 ml of distilled water was introduced into a first beaker with 12 ml of nitric acid solution (13.1 mol/l). 2.0 g of metallic tin were introduced into the thus diluted nitric acid solution under stirring so as to obtain 52.5 g of tin nitrate solution. 150.4 g of zirconyl nitrate solution (290 g/l, expressed as oxide), 55.5 g of ceric nitrate solution (260 g/l, expressed as oxide), and 52.5 g of tin nitrate solution (54.4 g/l, expressed as oxide) prepared in the first beaker were introduced into a stirred second beaker. The mixture was subsequently made up with distilled water so as to obtain 425 ml of a first solution of nitrates of cerium, zirconium and tin (Solution 1). 9.1 g of lanthanum nitrate solution (468 g/l, expressed as oxide), and 32.3 g of yttrium nitrate solution (216 g/l, expressed as oxide) were introduced into a stirred third beaker. The mixture was subsequently made up with distilled water so as to obtain 75 ml of a second solution of nitrates of lanthanum and yttrium(Solution 2). 114.4 ml of an aqueous ammonia solution (13.5 mol/l) was introduced into a stirred reactor and the volume was then made up with distilled water so as to obtain a total volume of 500 ml. Solutions 1 and 2 previously prepared were kept constantly stirring. Solution 1 was introduced, over the course of 50 minutes, into the reactor stirred at a speed of 500 rpm. Solution 2 was introduced over the course of 10 minutes and the stirring was fixed at 200 rpm. The solution obtained was placed in a stainless steel autoclave equipped with a stirrer. The temperature of the medium was brought to 150°C for 2 hours with stirring. 16.5 g of lauric acid was added to the resulting suspension. The suspension was kept stirring for 1 hour. The suspension obtained was then filtered through a Büchner funnel, and then washed with 1 1 of aqueous ammonia solution. The product obtained was calcined at 840°C for 2 hours under stationary conditions.

### Example 2

Preparation of a composition based on cerium, zirconium, lanthanum, yttrium and tin oxides in the respective proportions by weight of oxide of 20%, 55%, 5%, 15% and 5%.Tin nitrate was prepared as described in Example 1. 137.9 g of zirconyl nitrate solution (290 g/l, expressed as oxide), 55.5 g of ceric nitrate solution (260 g/l, expressed as oxide), 52.5 g of tin nitrate solution (54.4 g/l, expressed as oxide), 9.1 g of lanthanum nitrate solution (468 g/l, expressed as oxide), and 48.5 g of yttrium nitrate solution (216 g/l, expressed as oxide) were introduced into a stirred beaker. The mixture was subsequently made up with distilled water so as to obtain 500 ml of a solution of the cerium, zirconium, tin, lanthanum and yttrium salts. 116.8 ml of an aqueous ammonia solution (13.5 mol/l) was introduced into a stirred reactor and the volume was adjusted with distilled water to a total volume of 500 ml. The nitrate solution of cerium, zirconium, tin, lanthanum and yttrium was introduced, over the course of 60 minutes, into the reactor stirred at a speed of 500 rpm. The operation was subsequently carried out as in Example 1.

### Example 3

Preparation of the same composition as in Example 2, using the process of Example 1.

The composite oxide was prepared in the same way as in Example 1 except that the quantity of zirconyl nitrate solution was 137.9 g instead of 150.4 g, the quantity of yttrium nitrate solution was 48.6 g instead of 32.3 g and the quantity of ammonia solution was 116.9 ml instead of 114.4 ml.

### Comparative Example 1

Preparation of a composition based on cerium, zirconium and tin oxides in the respective proportions by weight of oxide of 20%, 75% and 5%, in accordance with WO 2005100249 A2.

188.0 g of zirconyl nitrate solution (290 g/l, expressed as oxide), 55.5 g of ceric nitrate solution (260 g/l, expressed as oxide) and 5.8 g of tin (IV) chloride pentahydrate were introduced into a stirred beaker. The mixture was subsequently made up with distilled water so as to obtain 500 ml of a solution of cerium, zirconium and tin salts. 98.1 ml of an aqueous ammonia solution (13.5 mol/l) was introduced into a stirred reactor and the volume was then adjusted with distilled water to a total volume of 500 ml. The nitrate solution of the cerium, zirconium and tin was introduced, over the course of 60 minutes, into the reactor stirred at a speed of 500 rpm. The suspension thus obtained was filtered through a Büchner funnel, and then washed twice with 1000 ml of aqueous ammonia solution. The precipitate was subsequently resuspended in 657.5 ml of aqueous ammonia solution. The solution obtained was placed in a stainless steel autoclave equipped with a stirrer. The temperature of the medium was brought to 150°C for 2 hours with stirring. The suspension obtained was then filtered through a Büchner funnel, and then washed twice with 750 ml of aqueous ammonia solution. The operation was subsequently carried out as in Example 1.

### Comparative Example 2

Preparation of a composition based on cerium, zirconium, lanthanum and tin oxides in the respective proportions by weight of oxide of 20%, 68%, 7% and 5%. The composite oxide was prepared in the same way as in Example 2 except that the quantity of zirconyl nitrate solution was 170.5 g instead of 137.9 g, the quantity of lanthanum nitrate was 12.8 g instead of 9.1 g, the quantity of ammonia solution was 109.4 ml instead of 116.8 ml and no yttrium nitrate was added.

### Comparative Example 3

Preparation of a composition based on cerium, zirconium, lanthanum and neodymium oxides in the respective proportions by weight of oxide of 21%, 72%, 2% and 5%.180.5 g of zirconyl nitrate solution (290 g/l, expressed as oxide), 58.2 g of ceric nitrate solution (260 g/l, expressed as oxide), 3.7 g of lanthanum nitrate solution (468 g/l, expressed as oxide) and 12.4 g of neodymium nitrate solution (297 g/l, expressed as oxide) were introduced into a stirred beaker. The mixture was subsequently adjusted with distilled water to obtain 500 ml of a solution of the cerium, zirconium, lanthanum and neodymium salts. 98.0 ml of an aqueous ammonia solution (13.5 mol/l) was introduced into a stirred reactor and the volume was then made up with distilled water so as to obtain a total volume of 500 ml. The nitrate solution of cerium, zirconium, lanthanum and neodymium was introduced, over the course of 60 minutes, into the reactor stirred at a speed of 500 rpm. The operation was subsequently carried out as in Example 1.

The BET specific surface areas obtained after calcination at different temperatures (1000°C or 1100°C for 6 hours) and the maximum reduction temperature after calcination are expressed in Table 1.

**Table 1**

| **Compositions** | **SBET 1000°C/6 h (m²/g)** | **SBET 1100°C/6 h (m²/g)** | **Maximum reduction temperature (°C)** |
|---|---|---|---|
| **Example 1:** ZrCeLaYSn 60/20/5/10/5 | 62 | 33 | 348 |
| **Example 2:** ZrCeLaYSn 55/20/5/15/5 | 59 | 32 | 346 |
| **Example 3:** ZrCeLaYSn 55/20/5/15/5 | 64 | 38 | 331 |
| **Comparative Ex. 1:** ZrCeSn 70/20/5 | 15 | 4 | 614 |
| **Comparative Ex. 2:** ZrCeLaSn 68/20/7/5 | 40 | 20 | 380 |
| **Comparative Ex. 3:** ZrCeLaNd 72/21/2/5 | 45 | 25 | 580 |

The compositions of the present invention provide higher specific surface area after calcination at high temperatures and a lower maximum reduction temperature (Examples 1 to 3), in comparison with the compositions based on zirconium oxide and cerium oxide of the prior art that do not comprise lanthanum oxide, tin oxide and yttrium and/or gadolinium oxide (Comparative Examples 1 to 3).

### Comparative example 4

Preparation of the same composition as in Examples 2 and 3 but using the process described in US2007/0244002.

138.5 g of zirconyl nitrate solution (289 g/l, expressed as oxide), 55.3 g of ceric nitrate solution (262 g/l, expressed as oxide), 5.3 g of tin (IV) chloride pentahydrate, 10.3 g of lanthanum nitrate solution (394 g/l, expressed as oxide), 49.3 g of yttrium nitrate solution (214 g/l, expressed as oxide), and 83.9 g of D-sorbitol were introduced into a stirred crucible. The mixture was subsequently made up with distilled water so as to obtain 500 ml of a solution of the cerium, zirconium, tin, lanthanum , yttrium and D-sorbitol salts. The solution of the cerium, zirconium, tin, lanthanum, yttrium and D-sorbitol salts was dried under stirred condition and calcined at 700°C for 6 hours and 840°C for 2 hours under stationary conditions.

### Comparative example 5

Preparation of the same composition as in Examples 2 and 3 but using a process not comprising the step of heating the precipitate in an aqueous medium.

138.5 g of zirconyl nitrate solution (289 g/l, expressed as oxide), 55.3 g of ceric nitrate solution (262 g/l, expressed as oxide), 5.3 g of tin (IV) chloride pentahydrate, 10.3 g of lanthanum nitrate solution (394 g/l, expressed as oxide) and 49.3 g of yttrium nitrate solution (214 g/l, expressed as oxide) were introduced into a stirred beaker. The mixture was subsequently adjusted with distilled water to obtain 500 ml of a solution of cerium, zirconium, tin, lanthanum and yttrium salts. 116.5 ml of an aqueous ammonia solution (13.5 mol/l) was introduced into a stirred reactor and the volume was adjusted with distilled water to obtain a total volume of 500 ml. The nitrate solution of cerium, zirconium, tin, lanthanum and yttrium salts was introduced, over the course of 60 minutes, into the reactor stirred at a speed of 500 rpm. The suspension obtained was then filtered through a Büchner funnel, and then washed with 1 1 of aqueous ammonia solution. The product obtained was calcined at 840°C for 2 hours under stationary conditions.

The BET specific surface areas obtained after calcinations at different temperatures (1000°C or 1100°C) of the oxides of Example 3, Comparative Example 4 and Comparative Example 5 are reported in Table 2.

**Table 2**

| **Compositions** | **SBET 1000°C/6 h (m²/g)** | **SBET 1100°C/6 h (m²/g)** |
|---|---|---|
| **Example 3:** ZrCeLaYSn 55/20/5/15/5 | 64 | 38 |
| **Comparative Ex. 4:** ZrCeLaYSn 55/20/5/15/5 | 13 | 6 |
| **Comparative Ex.5:** ZrCeLaYSn 55/20/5/15/5 | 25 | 13 |

The compositions of the present invention have a higher specific surface area after calcination at high temperatures, in comparison with the compositions of the prior art.

## Claims

1. A composition comprising zirconium oxide, cerium oxide, and:
- between 0.1 and 10.0% by weight of lanthanum oxide;
- between 3.0 and 20.0% by weight of yttrium and/or gadolinium oxide; and
- between 1.0 and 15.0% by weight of tin oxide;
wherein said composition exhibits:
- a BET specific surface area, after calcination at 1000°C for 6 hours, of at least 45 m²/g; and
- a BET specific surface area, after calcination at 1100°C for 6 hours, of at least 25 m²/g.

2. Composition according to claim 1 wherein the BET specific surface area, after calcination at 1000°C for 6 hours, is at least 50 m²/g.

3. Composition according to claim 1 or 2 wherein the BET specific surface area, after calcination at 1100°C for 6 hours, is at least to 30 m²/g.

4. Composition according to anyone of claims 1 to 3 wherein said composition also comprises praseodymium and/or neodymium oxide in an amount comprised between 0.0 and 10.0 % by weight.

5. Composition according to any one of claims 1 to 4 wherein the cerium oxide and the zirconium oxide are the complement to 100% by weight of the composition.

6. Composition according to any one of claims 1 to 4 wherein the Ce/Zr molar ratio is comprised between 0.1 and 4.0.

7. Composition according to claim 6, wherein the Ce/Zr molar ratio is comprised between 0.15 and 2.25.

8. Composition according to claim 6 or 7, wherein the Ce/Zr molar ratio is inferior or equal to 1.00.

9. Composition according to any one of claims 1 to 8, wherein said composition exhibits a maximum reduction temperature, measured by a temperature-programmed reduction, H2-TPR, inferior or equal to 500°C.

10. Composition according to any one of claims 1 to 9, wherein said composition exhibits a maximum reduction temperature, measured by a temperature-programmed reduction, H2-TPR, inferior or equal to 400°C.

11. Process for the production of the composition according to any one of claims 1 to 10, comprising the steps of:
(a) forming a mixture comprising compounds of zirconium, cerium, tin, lanthanum, yttrium and/or gadolinium and, optionally other compounds, in a liquid medium;
(b) bringing said mixture into contact with a basic compound, to obtain a precipitate;
(c) heating said precipitate in an aqueous medium; and
(d) calcining the precipitate
wherein an additive selected from the group consisting of anionic surfactants, nonionic surfactants, polyethylene glycols, carboxylic acids and their salts and surfactants of the carboxymethylated fatty alcohol ethoxylate type is added to the precipitate obtained in step (c).

12. Process for the production of the composition of any one of claims 1 to 10, comprising the steps of:
(a1) forming a mixture comprising either 1) zirconium and cerium compounds only, or 2) zirconium and cerium compounds with one or more of the compounds of tin, lanthanum,
yttrium and/or gadolinium in a liquid medium;
(b1) bringing said mixture in contact with a basic compound, under stirring;
(c1) bringing the medium obtained in the preceding step in contact, under stirring, with the remaining compound(s) of the composition if these compound(s) were not present in step (a1), the stirring energy during step (c1) being less than that used during step (b1);
(d1) heating said precipitate in an aqueous medium; optionally
(e1) adding an additive selected from the group consisting of anionic surfactants, nonionic surfactants, polyethylene glycols, carboxylic acids and their salts and surfactants of the carboxymethylated fatty alcohol ethoxylate type is added to the precipitate obtained in the preceding step; and
(f1) calcining the resulting precipitate.

13. A catalytic system, comprising a composition as defined in any one of claims 1 to 10.

14. A process for the treatment of exhaust gases from internal combustion engines, comprising the step of bringing into contact said gases with the catalytic system as claimed in claim 13.

15. A process for the purification of air, said air comprising carbon monoxide, ethylene, aldehyde, amine, mercaptan, ozone, volatile organic compounds, atmospheric pollutants, fatty acids, hydrocarbons, aromatic hydrocarbons, nitrogen oxides or malodorous compounds, comprising the step of bringing into contact said gases with the catalytic system as claimed in claim 13.

## Patentansprüche

1. Zusammensetzung, umfassend Zirconiumoxid, Ceroxid und:
- zwischen 0,1 und 10,0 Gew.-% Lanthanoxid;
- zwischen 3,0 und 20,0 Gew.-% Yttrium- und/oder Gadoliniumoxid und
- zwischen 1,0 und 15,0 Gew.-% Zinnoxid;
wobei die Zusammensetzung
- eine spezifische BET-Oberfläche nach 6 Stunden Calcinierung bei 1000 °C von mindestens 45 m²/g und
- eine spezifische BET-Oberfläche nach 6 Stunden Calcinierung bei 1100 °C von mindestens 25 m²/g
aufweist.

2. Zusammensetzung nach Anspruch 1, wobei die spezifische BET-Oberfläche nach 6 Stunden Calcinierung bei 1000 °C mindestens 50 m²/g beträgt.

3. Zusammensetzung nach Anspruch 1 oder 2, wobei die spezifische BET-Oberfläche nach 6 Stunden Calcinierung bei 1100 °C mindestens 30 m²/g beträgt.

4. Zusammensetzung nach einem der Ansprüche 1 bis 3, wobei die Zusammensetzung außerdem Praseodym- und/oder Neodymoxid in einer Menge zwischen 0,0 und 10,0 Gew.-% umfasst.

5. Zusammensetzung nach einem der Ansprüche 1 bis 4, wobei das Ceroxid und das Zirconiumoxid die Ergänzung zu 100 Gew.-% der Zusammensetzung sind.

6. Zusammensetzung nach einem der Ansprüche 1 bis 4, wobei das Ce/Zr-Molverhältnis zwischen 0,1 und 4,0 liegt.

7. Zusammensetzung nach Anspruch 6, wobei das Ce/Zr-Molverhältnis zwischen 0,15 und 2,25 liegt.

8. Zusammensetzung nach Anspruch 6 oder 7, wobei das Ce/Zr-Molverhältnis kleiner oder gleich 1,00 ist.

9. Zusammensetzung nach einem der Ansprüche 1 bis 8, wobei die Zusammensetzung eine durch temperatur¬programmierte Reduktion, H₂-TPR, gemessene maximale Reduktionstemperatur kleiner oder gleich 500 °C aufweist.

10. Zusammensetzung nach einem der Ansprüche 1 bis 9, wobei die Zusammensetzung eine durch temperatur¬programmierte Reduktion, H₂-TPR, gemessene maximale Reduktionstemperatur kleiner oder gleich 400 °C aufweist.

11. Verfahren zur Herstellung der Zusammensetzung nach einem der Ansprüche 1 bis 10, das folgende Schritte umfasst:
(a) Bilden einer Mischung, die Verbindungen von Zirconium, Cer, Zinn, Lanthan, Yttrium und/oder Gadolinium und gegebenenfalls andere Verbindungen umfasst, in einem flüssigen Medium;
(b) Inkontaktbringen der Mischung mit einer basischen Verbindung zum Erhalt eines Nieder-schlags;
(c) Erhitzen des Niederschlags in einem wässrigen Medium und
(d) Calcinieren des Niederschlags;
wobei ein Additiv aus der Gruppe bestehend aus anionischen Tensiden, nichtionischen Tensiden, Polyethylenglykolen, Carbonsäuren und deren Salzen und Tensiden vom Typ carboxymethyliertes Fett¬alkohol¬ethoxylat zu dem in Schritt (c) erhaltenen Niederschlag gegeben wird.

12. Verfahren zur Herstellung der Zusammensetzung nach einem der Ansprüche 1 bis 10, das folgende Schritte umfasst:
(a1) Bilden einer Mischung, die entweder 1) nur Zirconium- und Cerverbindungen oder 2) Zirconium- und Cerverbindungen mit einer oder mehreren der Verbindungen von Zinn, Lanthan, Yttrium und/oder Gadolinium umfasst, in einem flüssigen Medium;
(b1) Inkontaktbringen der Mischung mit einer basischen Verbindung unter Rühren;
(c1) Inkontaktbringen des im vorhergehenden Schritt erhaltenen Mediums unter Rühren mit der verbliebenen Zusammensetzung bzw. den verbliebenen Zusammensetzungen der Zusammensetzung, falls diese Verbindung bzw. diese Verbindungen in Schritt (a1) nicht vorlag bzw. vorlagen, wobei die Rührenergie während Schritt (c1) kleiner ist als die während Schritt (b1) verwendete Rührenergie;
(d1) Erhitzen des Niederschlags in einem wässrigen Medium; gegebenenfalls
(e1) Zugeben eines Additivs aus der Gruppe bestehend aus anionischen Tensiden, nichtionischen Tensiden, Polyethylenglykolen, Carbonsäuren und deren Salzen und Tensiden vom Typ carboxy¬methy¬lier¬tes Fett¬alkohol¬ethoxylat zu dem im vorher¬gehenden Schritt erhaltenen Niederschlag gegeben wird und
(f1) Calcinieren des erhaltenen Niederschlags.

13. Katalytisches System, umfassend eine Zusammen-setzung gemäß einem der Ansprüche 1 bis 10.

14. Verfahren zur Behandlung von Abgasen von Verbrennungs¬motoren, bei dem man die Gase mit dem katalytischen System nach Anspruch 13 in Kontakt bringt.

15. Verfahren zur Reinigung von Luft, wobei die Luft Kohlenmonoxid, Ethylen, Aldehyd, Amin, Mercaptan, Ozon, flüchtige organische Verbindungen, atmosphä¬ir¬sche Verunreinigungen, Fettsäuren, Kohlen¬wasser¬stoffe, aromatische Kohlenwasser¬stoffe, Stick¬stoff¬oxide oder übelriechende Verbin¬dungen um¬fasst, bei dem man die Gase mit dem katalytischen System gemäß Anspruch 13 in Kontakt bringt.

## Revendications

1. Composition comprenant de l'oxyde de zirconium, de l'oxyde de cérium et :
- entre 0,1 et 10,0 % en poids d'oxyde de lanthane ;
- entre 3,0 et 20,0 % en poids d'oxyde d'yttrium et/ou de gadolinium ; et
- entre 1,0 et 15,0 % en poids d'oxyde d'étain ;
ladite composition présentant :
- une surface spécifique BET, après calcination à 1000 °C pendant 6 heures, d'au moins 45 m²/g ; et
- une surface spécifique BET, après calcination à 1100 °C pendant 6 heures, d'au moins 25 m²/g.

2. Composition selon la revendication 1, la surface spécifique BET, après calcination à 1000 °C pendant 6 heures, étant d'au moins 50 m²/g.

3. Composition selon la revendication 1 ou 2, la surface spécifique BET, après calcination à 1100 °C pendant 6 heures, étant d'au moins 30 m²/g.

4. Composition selon l'une quelconque des revendications 1 à 3, ladite composition comprenant également de l'oxyde de praséodyme et/ou de néodyme en une quantité comprise entre 0,0 et 10,0 % en poids.

5. Composition selon l'une quelconque des revendications 1 à 4, l'oxyde de cérium et l'oxyde de zirconium étant le complément à 100 % en poids de la composition.

6. Composition selon l'une quelconque des revendications 1 à 4, le rapport molaire Ce/Zr étant compris entre 0,1 et 4,0.

7. Composition selon la revendication 6, le rapport molaire Ce/Zr étant compris entre 0,15 et 2,25.

8. Composition selon la revendication 6 ou 7, le rapport molaire Ce/Zr étant inférieur ou égal à 1,00.

9. Composition selon l'une quelconque des revendications 1 à 8, ladite composition présentant une température maximale de réduction, mesurée par une réduction en température programmée, H₂-TPR, inférieure ou égale à 500 °C.

10. Composition selon l'une quelconque des revendications 1 à 9, ladite composition présentant une température maximale de réduction, mesurée par une réduction en température programmée, H₂-TPR, inférieure ou égale à 400°C.

11. Procédé pour la production de la composition selon l'une quelconque des revendications 1 à 10, comprenant les étapes consistant à :
(a) former un mélange comprenant des composés de zirconium, de cérium, d'étain, de lanthane, d'yttrium et/ou de gadolinium et, éventuellement, d'autres composés, dans un milieu liquide ;
(b) mettre ledit mélange en contact avec un composé basique, pour obtenir un précipité ;
(c) chauffer ledit précipité dans un milieu aqueux ; et
(d) calciner le précipité,
un additif choisi dans le groupe constitué par les tensioactifs anioniques, les tensioactifs non ioniques, les polyéthylèneglycols, les acides carboxyliques et leurs sels et les tensioactifs du type produit d'éthoxylation d'alcools gras carboxyméthylés étant ajouté au précipité obtenu dans l'étape (c).

12. Procédé pour la production de la composition de l'une quelconque des revendications 1 à 10, comprenant les étapes consistant à :
(a1) former un mélange comprenant soit 1) des composés de zirconium et de cérium seulement, soit 2) des composés de zirconium et de cérium conjointement avec un ou plusieurs des composés d'étain, de lanthane, d'yttrium et/ou de gadolinium dans un milieu liquide ;
(b1) mettre ledit mélange en contact avec un composé basique, sous agitation ;
(c1) mettre le milieu obtenu dans l'étape précédente en contact, sous agitation, avec le ou les composés restants de la composition si ce ou ces composés n'étaient pas présents dans l'étape (a1), l'énergie d'agitation pendant l'étape (c1) étant inférieure à celle utilisée pendant l'étape (b1) ;
(d1) chauffer ledit précipité dans un milieu aqueux ; éventuellement
(e1) ajouter un additif choisi dans le groupe constitué par les tensioactifs anioniques, les tensioactifs non ioniques, les polyéthylèneglycols, les acides carboxyliques et leurs sels et les tensioactifs du type produit d'éthoxylation d'alcools gras carboxyméthylés est ajouté au précipité obtenu dans l'étape précédente ; et
(f1) calciner le précipité résultant.

13. Système catalytique, comprenant une composition telle que définie dans l'une quelconque des revendications 1 à 10.

14. Procédé pour le traitement de gaz d'échappement provenant de moteurs à combustion interne, comprenant l'étape consistant à mettre en contact lesdits gaz avec le système catalytique tel que revendiqué dans la revendication 13.

15. Procédé pour la purification d'air, ledit air comprenant du monoxyde de carbone, de l'éthylène, un aldéhyde, une amine, un mercaptan, de l'ozone, des composés organiques volatils, des polluants atmosphériques, des acides gras, des hydrocarbures, des hydrocarbures aromatiques, des oxydes d'azote ou des composés malodorants, comprenant l'étape consistant à mettre en contact lesdits gaz avec le système catalytique tel que revendiqué dans la revendication 13.
